# EUROPEAN PATENT SPECIFICATION

(11) **EP 3 960 599 B1**
(45) Date of publication and mention of the grant of the patent: **31.05.2023**
(21) Application number: 21179882.2
(22) Date of filing: 16.06.2021
(51) Int. Cl.: B62J 6/027, B62J 6/015, B60Q 1/00

(54) **STRADDLED VEHICLE**
GRÄTSCHSITZFAHRZEUG
VÉHICULE À ENFOURCHER

(30) Priority: 31.08.2020 JP 2020145735
(43) Date of publication of application: 02.03.2022
(73) Proprietor: Yamaha Hatsudoki Kabushiki Kaisha, Iwata-shi, Shizuoka 438-8501 (JP)
(72) Inventor: SATONAKA, Yukinari, Iwata-shi, 4388501 (JP)
(74) Representative: Di Sciuva, Michele

(56) References cited:
- EP-A1- 2 933 173
- WO-A1-2020/035905
- JP-A- 2012 176 755
- US-A- 4 189 762

## Description

### TECHNICAL FIELD

The present invention relates to a straddled vehicle.

### BACKGROUND ART

A straddled vehicle is equipped with a lighting device such as a headlight and a light control unit. The light control unit controls lighting of the lighting device. The light control unit is supported by a frame via a stay. For example, the light control unit is fixed to the stay by bolts.

### SUMMARY OF THE INVENTION

As described above, when the light control unit is rigidly fixed to the stay, the vibration isolation of the light control unit becomes low. When the light control unit is supported by an elastic stay in order to improve the vibration isolation of the light control unit, it is difficult to stably hold the light control unit.

Further, the light control unit is an electronic component and has a connector to which an electric cable is connected. Therefore, it is desired to prevent water from entering the connector. However, when the light control unit is arranged in a place where water is difficult to enter, the degree of freedom in layout of the light control unit is reduced. Further, when a waterproof structure for the connector of the light control unit is provided, the arrangement space for the light control unit is expanded due to the waterproof structure.

EP-A-2933173 discloses a straddle vehicle according to the preamble of claim 1. In particular, EP-A-2933173 discloses a headlight device for a motorcycle accommodated in a front fairing. The headlight device includes lamp units using LEDs as light sources, and a power supply circuit unit which controls power from a power supply and supplies the power to the light sources. The power supply circuit unit is accommodated in a recess provided in an upper portion of the lamp units.

An object of the present invention is to improve vibration isolation and holding stability of a light control unit, and to prevent a connector from getting wet with water.

A straddled vehicle according to claim 1 includes a headlight, a light control unit configured to control the headlight, a holder that holds the light control unit and is made of elastic material, and a stay that supports the holder.. The light control unit includes a main body and a connector. The connector projects downward from the main body. The holder includes a support portion and a band. The support portion is located below the light control unit. The band is arranged behind, above, and in front of the light control unit. The band is wound around the light control unit. The band extends from above to below the light control unit. The band overlaps the connector as seen in a vehicle front view.

According to the straddled vehicle according to claim 1, the light control unit is attached to the stay via the holder made of the elastic material. Therefore, the vibration isolation of the light control unit is improved. The band made of the elastic material is wound around the light control unit, so that the light control unit is held by the holder. As a result, the light control unit is stably held. The band is wound around the light control unit and extends from above to below the light control unit. Therefore, water easily flows downward along the band. Since the connector is arranged facing downward, water intrusion into the connector is suppressed. In addition, the band prevents the connector from getting wet with water. Therefore, it is possible to prevent the connector from getting wet with water while suppressing the decrease in the degree of freedom in the layout of the light control unit and the expansion of the arrangement space.

A lower edge of the band may be located below a lower edge of the connector. In this case, the connector is even less likely to get wet.

The band may include a hole. The holder may be attached to the stay by inserting the stay into the hole. In this case, the holder can be attached to the stay by inserting it regardless of a bolt. Therefore, the light control unit can be arranged even at a position where it is difficult to provide a tool path. As a result, the degree of freedom in arranging the light control unit is improved.

The stay may be inserted into the hole from below. In this case, the stay can be inserted into the hole of the holder by bringing the holder to the stay from above. As a result, the holder can be easily attached to the stay.

The holder may include a protrusion protruding from an inner surface of the band toward the light control unit. In this case, the protrusion presses the light control unit. As a result, the light control unit is stably held in the holder.

The band may include a front surface, an upper surface, and a rear surface. The front surface may be located in front of the light control unit and may extend upward from the support portion. The upper surface is located above the light control unit and may extend rearward from an upper edge of the front surface. The rear surface may be located behind the light control unit and extend downward from the upper surface. In this case, the band is wrapped so as to cover the front, top, and back of the light control unit. Thereby, the light control unit can be easily held by the holder.

The rear surface may overlap the connector as seen in the vehicle front view. In this case, the rear surface of the band prevents the connector from getting wet with water.

A lower end of the rear surface may be located below a lower end of the connector. In this case, the rear surface of the band further prevents the connector from getting wet with water.

The support portion and the band may be integrally formed. In this case, the light control unit can be easily attached to the holder.

The band may include a locked portion. The support portion may include a locking portion that locks to the locked portion. In this case, the light control unit can be easily attached to the holder.

The band may be wound around the light control unit under tension. In this case, the light control unit is more stably held in the holder.

The support portion may include a bottom surface that is located below the light control unit. The bottom surface may include a hole through which the connector is passed. In this case, interference between the connector and the holder is prevented.

The support portion may include a side surface that is located laterally to the light control unit. In this case, the lateral movement of the light control unit is restricted by the side surface. As a result, the light control unit is stably held.

The band may be wound around the light control unit so that the light control unit is laterally open. In this case, the band is miniaturized. In addition, interference with the band is prevented on the side of the light control unit.

### BRIEF DESCRIPTION OF THE DRAWINGS

FIG. 1 is a side view of a straddled vehicle according to an embodiment.
FIG. 2 is a front view of the straddled vehicle.
FIG. 3 is a sectional view taken along line III-III in FIG. 2.
FIG. 4 is a perspective view of a light control unit and a holder.
FIG. 5 is a perspective view of the light control unit and the holder.
FIG. 6 is an enlarged cross-sectional view of the light control unit and the holder.
FIG. 7 is a rear view of the light control unit.
FIG. 8 is a perspective view of the holder.
FIG. 9 is a rear view of the holder.
FIG. 10 is a side view of the holder.
FIG. 11 is a perspective view showing the holder and a structure around the holder.

### DESCRIPTION OF EMBODIMENTS

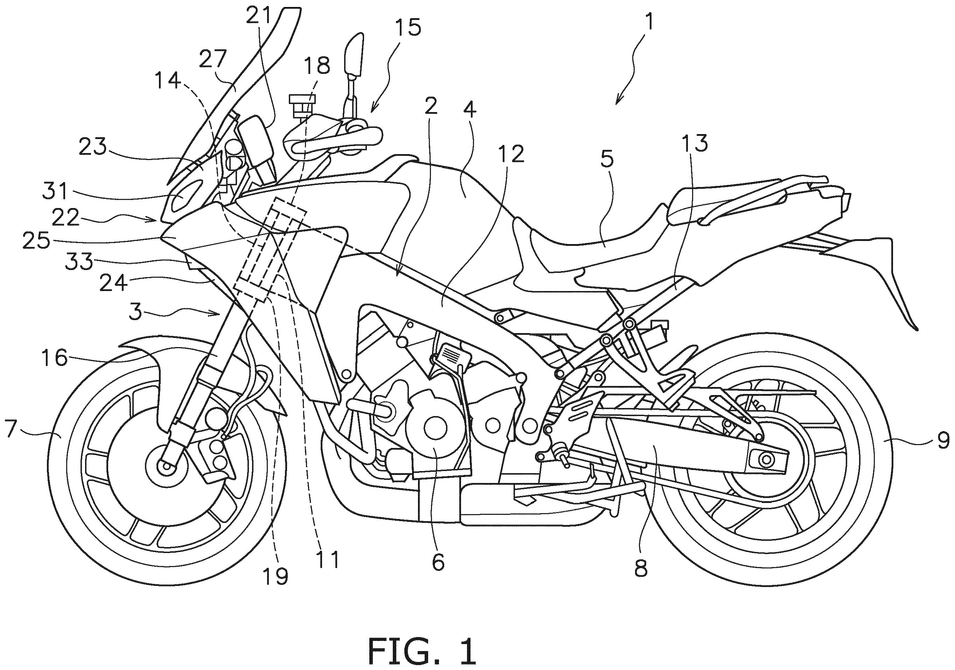

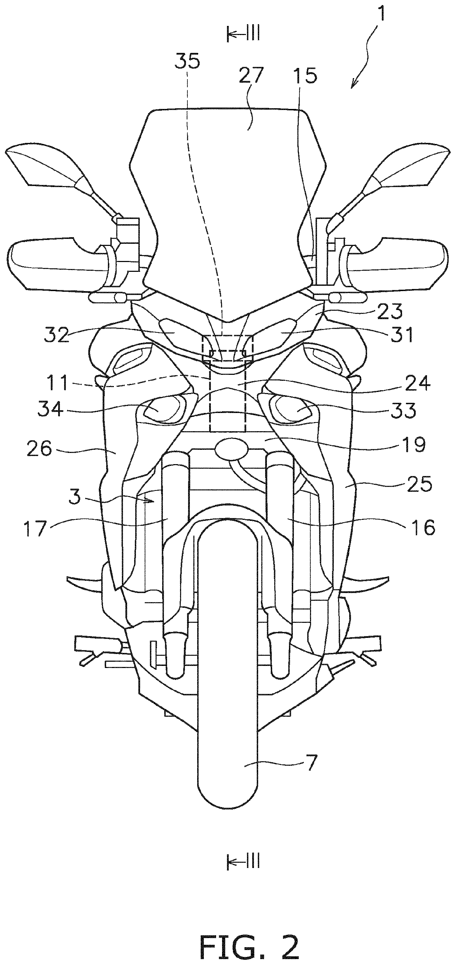

Hereinafter, a straddled vehicle according to an embodiment will be described with reference to the drawings. FIG. 1 is a side view of the straddled vehicle 1 according to the embodiment. FIG. 2 is a front view of the straddled vehicle 1. As illustrated in FIGS. 1 and 2, the straddled vehicle 1 includes a body frame 2, a steering device 3, a fuel tank 4, a seat 5, a power unit 6, a front wheel 7, a swing arm 8, and a rear wheel 9.

The body frame 2 includes ahead pipe 11, a main frame 12, and a rear frame 13. The main frame 12 is connected to the head pipe 11. The main frame 12 extends rearward from the head pipe 11. The rear frame 13 is connected to the main frame 12. The rear frame 13 extends rearward from the main frame 12. In the present embodiment, forward, rear, left, right, up, and down directions mean forward, rear, left, right, up, and down directions as seen from a rider seated on the seat 5.

The steering device 3 is rotatably supported by the head pipe 11. The steering device 3 rotatably supports the front wheel 7. The steering device 3 includes a steering shaft 14, a handle member 15, left and right suspensions 16 and 17, an upper bracket 18, and a lower bracket 19. The steering shaft 14 is inserted into the head pipe 11. The handle member 15 is arranged above the head pipe 11. The handle member 15 extends in a left-right direction of the straddled vehicle. A meter unit 21 is arranged in front of the handle member 15. The meter unit 21 includes, for example, a speedometer. The left and right suspensions 16 and 17 are connected to the steering shaft 14 via the upper bracket 18 and the lower bracket 19. The left and right suspensions 16 and 17 rotatably support the front wheel 7.

The fuel tank 4 is arranged behind the head pipe 11. The fuel tank 4 is supported by the main frame 12. The seat 5 is arranged behind the fuel tank 4. The seat 5 is arranged above the rear frame 13. The power unit 6 is arranged below the fuel tank 4. The power unit 6 is supported by the main frame 12. The power unit 6 includes, for example, an internal combustion engine.

The rear wheel 9 is supported by the main frame 12 via the swing arm 8. The rear wheel 9 is rotatably supported by the swing arm 8. The swing arm 8 is swingably supported by the main frame 12.

The straddled vehicle 1 includes a front cowl 22. The front cowl 22 is arranged in front of and both lateral sides of the head pipe 11. The front cowl 22 overlaps with the steering device 3 as seen in a vehicle side view. The front cowl 22 includes a front upper cowl 23, a front lower cowl 24, a left side cowl 25, and a right side cowl 26. The front upper cowl 23 is arranged in front of the head pipe 11. The front upper cowl 23 overlaps with the head pipe 11 as seen in a vehicle front view. A windshield 27 is arranged above the front upper cowl 23.

The front lower cowl 24 is arranged below the front upper cowl 23. The front lower cowl 24 is arranged in front of the head pipe 11. The front lower cowl 24 overlaps the head pipe 11 as seen in the vehicle front view. The left side cowl 25 is arranged on the left side of the head pipe 11. The left side cowl 25 overlaps with the head pipe 11 as seen in the vehicle side view. The left side cowl 25 overlaps with the steering device 3 as seen in the vehicle side view. The right side cowl 26 is arranged on the right side of the head pipe 11. The right side cowl 26 overlaps with the head pipe 11 as seen in the vehicle side view. The right side cowl 26 overlaps with the steering device 3 as seen in the vehicle side view.

The straddled vehicle 1 includes lighting devices 31 to 34 and a light control unit 35. The lighting devices 31 to 34 are arranged on the front cowl 22. The lighting devices 31 to 34 include left and right position lights 31 and 32 and left and right headlights 33 and 34. The position lights 31 and 32 are arranged on the front upper cowl 23. The headlights 33 and 34 are arranged on the front lower cowl 24. As seen in the vehicle front view, the headlights 33 and 34 are arranged below the position lights 31 and 32.

The light control unit 35 includes electronic components such as a microcomputer and controls lighting of the headlights 33 and 34. The light control unit 35 is arranged in front of the head pipe 11. The light control unit 35 is arranged behind the front upper cowl 23. The light control unit 35 overlaps with the head pipe 11 as seen in the vehicle front view. The light control unit 35 overlaps the front upper cowl 23 as seen in the vehicle front view.

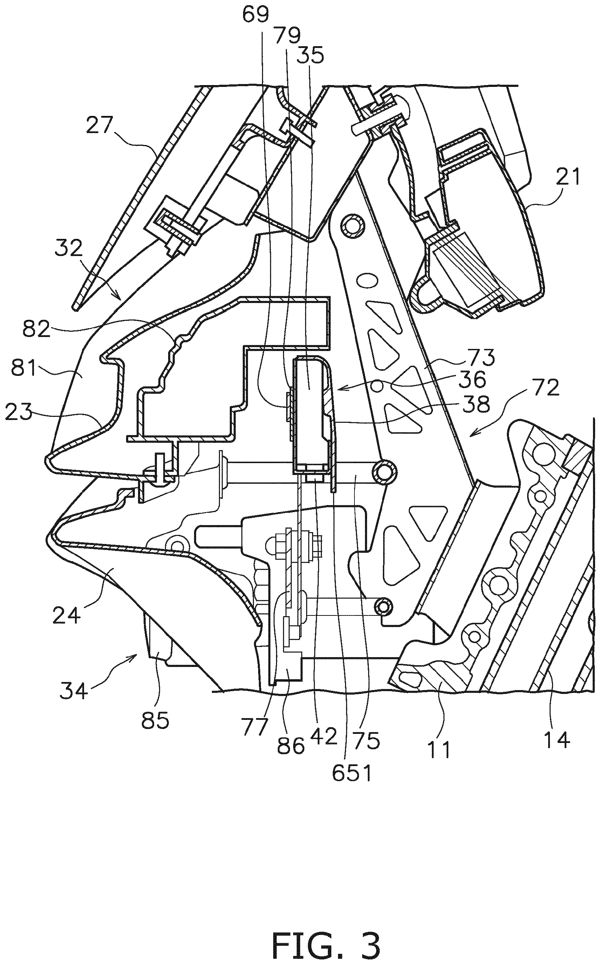

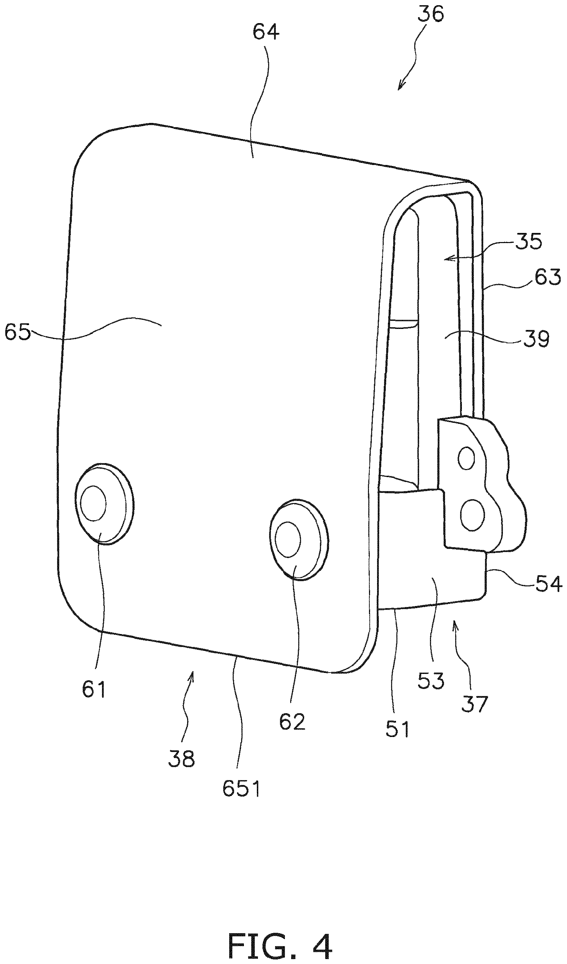

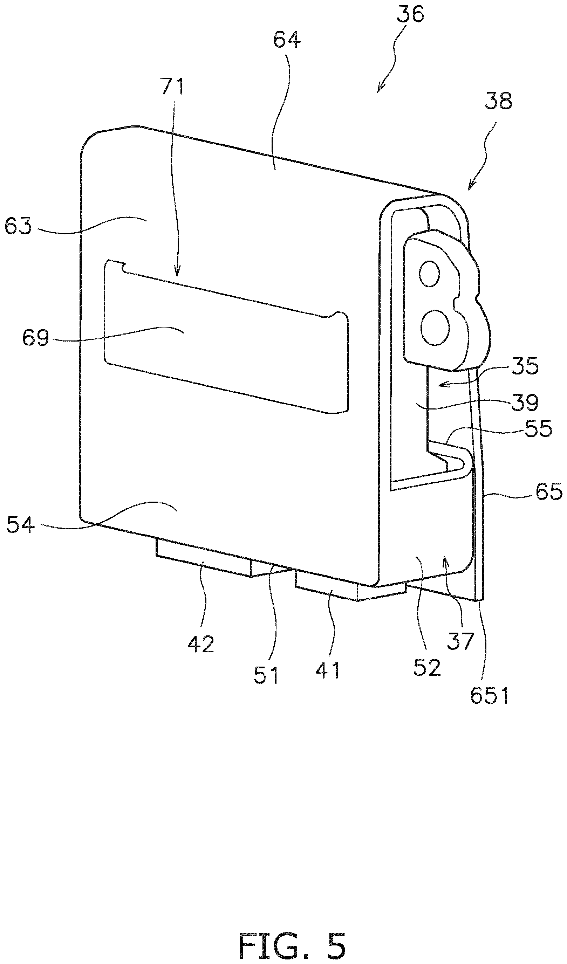

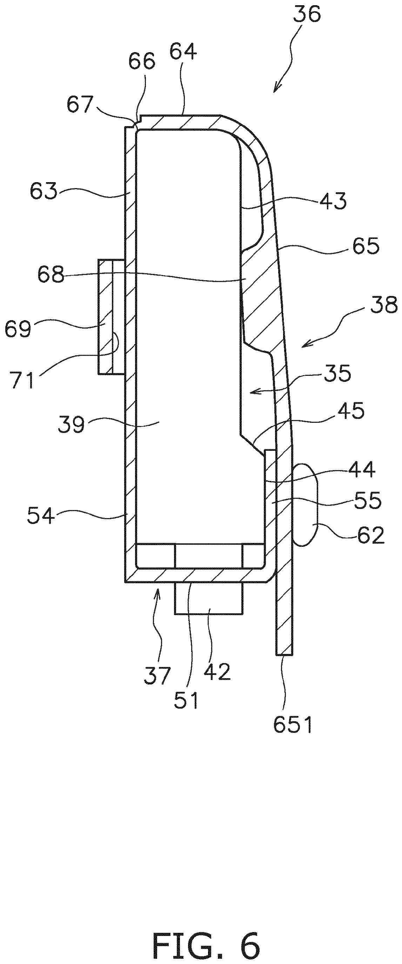

FIG. 3 is a sectional view taken along line III-III in FIG. 2. As illustrated in FIG. 3, the straddled vehicle 1 includes a holder 36 that holds the light control unit 35. FIGS. 4 and 5 are perspective views of the light control unit 35 and the holder 36. FIG. 6 is an enlarged cross-sectional view of the light control unit 35 and the holder 36.

As illustrated in FIGS. 4 to 6, the holder 36 includes a support portion 37 and a band 38. The support portion 37 is arranged below the light control unit 35. The support portion 37 supports the light control unit 35 from below. The bands 38 are arranged in front of, above, and behind the light control unit 35.

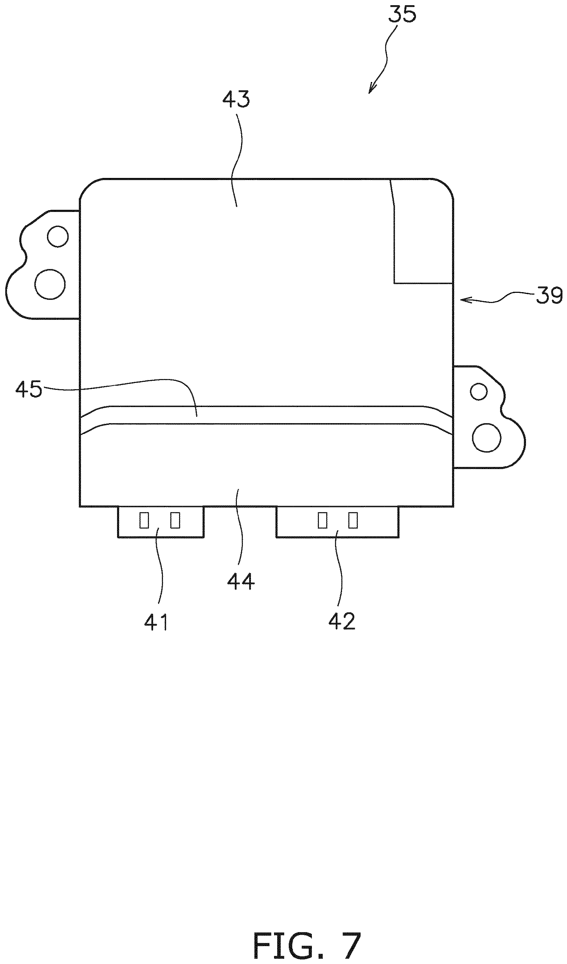

FIG. 7 is a rear view of the light control unit 35. As illustrated in FIG. 7, the light control unit 35 includes a main body 39 and a plurality of connectors 41 and 42. The main body 39 has a thin flat shape in a longitudinal direction of the straddled vehicle 1. The dimension of the main body 39 in the longitudinal direction is smaller than the dimensions in the vertical direction and the left-right direction. The dimension of the main body 39 in the vertical direction is smaller than the dimension in the left-right direction. As illustrated in FIG. 6, the main body 39 includes a main upper portion 43 and a main lower portion 44. In the longitudinal direction, the main upper portion 43 is thinner than the main lower portion 44. On a rear surface of the light control unit 35, a step portion 45 is provided between the main upper portion 43 and the main lower portion 44.

The plurality of connectors 41 and 42 project downward from the main body 39. The plurality of connectors 41 and 42 are arranged in the left-right direction. Electric cables (not illustrated) are connected to the plurality of connectors 41 and 42. The plurality of connectors 41 and 42 include a first connector 41 and a second connector 42. The first connector 41 and the second connector 42 are arranged apart from each other in the left-right direction. The first connector 41 is connected to the headlights 33 and 34 via the electric cable. The second connector 42 is connected to a battery and a switch provided on the handle member 15 via the electric cable.

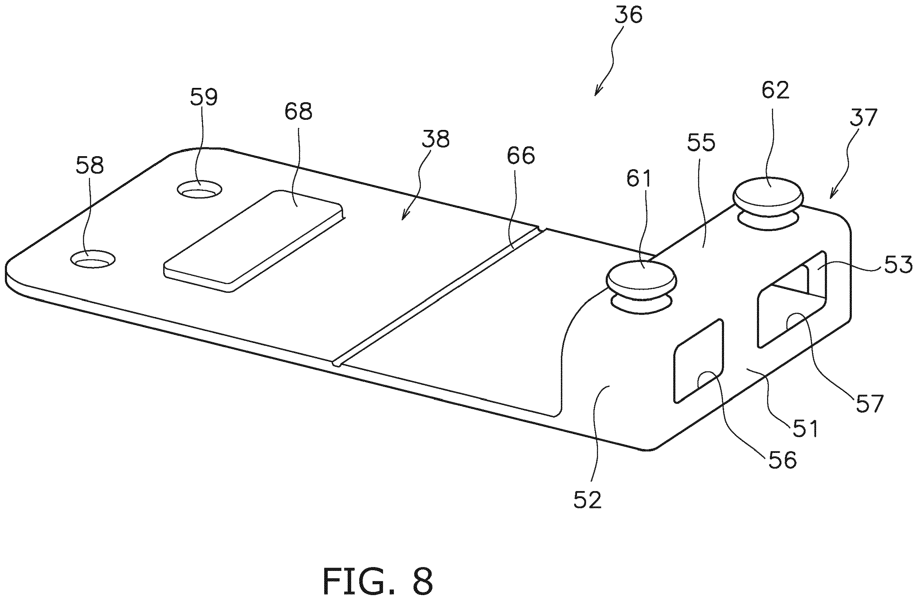

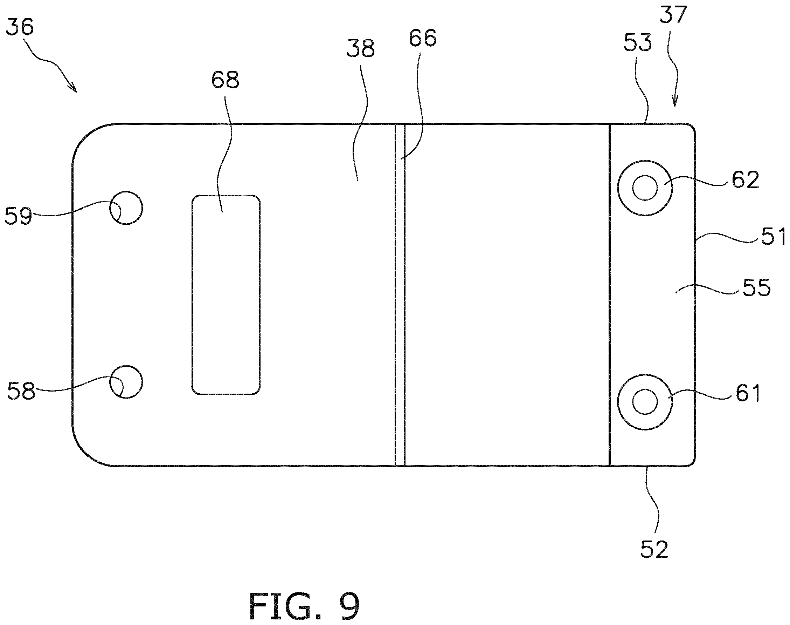

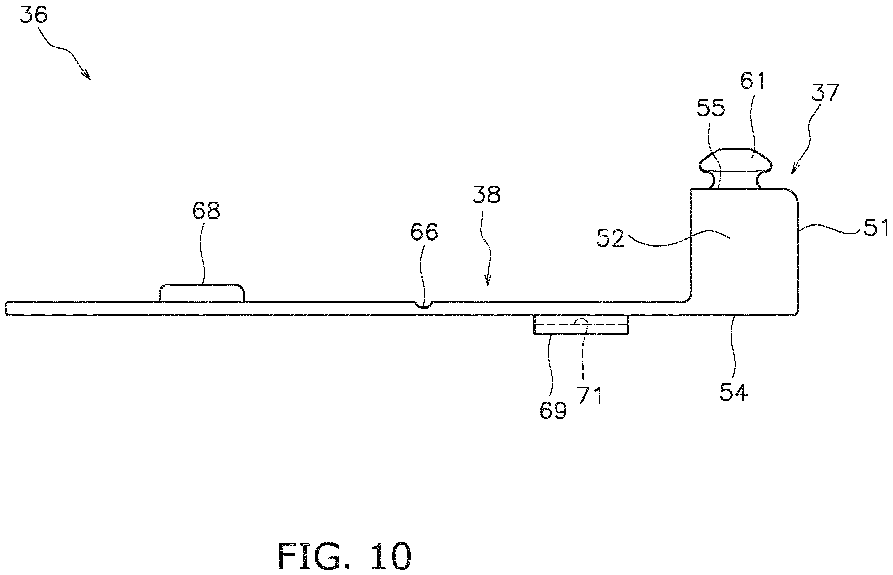

FIG. 8 is a perspective view of the holder 36 before being wound around the light control unit 35. FIG. 9 is a rear view of the holder 36 before being wound around the light control unit 35. FIG. 10 is a side view of the holder 36 before being wound around the light control unit 35. As illustrated in FIGS. 8 to 10, the support portion 37 and the band 38 are integrally formed. The holder 36 is made of an elastic material such as rubber.

The support portion 37 includes a bottom surface 51, a left side surface 52, a right side surface 53, a front surface 54, and a rear surface 55. The bottom surface 51 is arranged below the light control unit 35. The light control unit 35 is arranged on the bottom surface 51. The bottom surface 51 includes holes 56 and 57 through which the connectors 41 and 42 pass. Specifically, the bottom surface 51 includes a first hole 56 and a second hole 57. The first hole 56 and the second hole 57 are arranged apart from each other in the left-right direction. The first connector 41 is passed through the first hole 56. The second connector 42 is passed through the second hole 57.

The left side surface 52, the right side surface 53, the front surface 54, and the rear surface 55 extend upward from the bottom surface 51. The left side surface 52 is arranged on the left side of the light control unit 35. The right side surface 53 is arranged on the right side of the light control unit 35. The front surface 54 is arranged in front of the light control unit 35. The rear surface 55 is arranged behind the light control unit 35. An upper end of the left side surface 52, an upper end of the right side surface 53, and an upper end of the rear surface 55 are located below an upper end of the light control unit 35. The light control unit 35 projects upward from the left side surface 52, the right side surface 53, and the rear surface 55.

The band 38 is connected to the front surface 54 of the support portion 37. The band 38 has a sheet-like shape and extends from the front surface 54 of the support portion 37. The band 38 includes locked portions 58 and 59. The support portion 37 includes locking portions 61 and 62. The band 38 is fixed to the support portion 37 by locking the locking portions 61 and 62 to the locked portions 58 and 59. The locked portions 58 and 59 include holes. The plurality of locked portions 58 and 59 are arranged near the tip of the band 38. The plurality of locked portions 58 and 59 are arranged apart from each other in the left-right direction. The locking portions 61 and 62 include protrusions. The plurality of locking portions 61 and 62 are arranged on the rear surface 55 of the support portion 37. The plurality of locking portions 61 and 62 project rearward from the rear surface 55 of the support portion 37. The plurality of locking portions 61 and 62 are arranged apart from each other in the left-right direction. By passing the locking portions 61 and 62 through the holes of the locked portions 58 and 59, the locking portions 61 and 62 are locked to the locked portions 58 and 59.

When the light control unit 35 is attached to the holder 36, the operator winds the band 38 around the light control unit 35 while pulling the band 38. Then, the operator passes the locking portions 61 and 62 through the holes of the locked portions 58 and 59. As a result, the band 38 is tensioned and wound around the light control unit 35.

As illustrated in FIGS. 4 to 6, the band 38 includes a front surface 63, an upper surface 64, and a rear surface 65 in a state where the band 38 is wound around the light control unit 35. The front surface 63 is located in front of the light control unit 35 and extends upward from the support portion 37. The upper surface 64 is located above the light control unit 35 and extends rearward from the upper end of the front surface 63. The rear surface 65 is located behind the light control unit 35 and extends downward from the upper surface 64.

The band 38 does not cover the side surface of the light control unit 35. That is, the band 38 is wound around the light control unit 35 so that the light control unit 35 is opened to the lateral side. The rear surface 65 of the band 38 extends to below the bottom surface 51 of the support portion 37. The rear surface 65 of the band 38 extends to a position that overlaps with the connectors 41 and 42 as seen in the vehicle front view. That is, a lower end 651 of the rear surface 65 of the band 38 is located below the bottom surface 51 of the support portion 37. The rear surface 65 of the band 38 extends to below the lower ends of the connectors 41 and 42. That is, the lower end 651 of the rear surface 65 of the band 38 is located below the lower ends of the connectors 41 and 42. Therefore, as seen in the vehicle front view, the rear surface 65 of the band 38 overlaps the entire connectors 41 and 42.

As illustrated in FIGS. 8 to 10, a groove 66 is provided on an inner surface of the band 38. The groove 66 extends in the left-right direction. The groove 66 reaches left and right ends of the band 38. As illustrated in FIG. 6, the groove 66 is arranged between the front surface 63 and the upper surface 64 of the band 38. The groove 66 is arranged so as to fit a corner 67 of the light control unit 35. Since the band 38 is easily bent in the groove 66, the band 38 can be brought into close contact with the light control unit 35.

As illustrated in FIG. 6, the holder 36 includes a protrusion 68. The protrusion 68 projects from the inner surface of the band 38 toward the light control unit 35. Specifically, the protrusion 68 projects from the inner surface of the rear surface 65 of the band 38 toward the light control unit 35. As illustrated in FIGS. 8 and 9, the protrusion 68 extends in the left-right direction. The protrusion 68 has a shape longer in the left-right direction than in the vertical direction. As illustrated in FIG. 6, the protrusion 68 faces the main upper portion 43 of the light control unit 35. The protrusion 68 contacts the main upper portion 43 of the light control unit 35. The light control unit 35 is stably held in the holder 36 by the contact of the protrusion 68 with the main upper portion 43,.

The band 38 includes a convex portion 69 and a hole 71. The convex portion 69 projects forward from the front surface 63 of the band 38. The convex portion 69 extends in the left-right direction. The hole 71 is provided between the convex portion 69 and the front surface 63 of the band 38. The hole 71 penetrates the convex portion 69 in the vertical direction. The hole 71 has a shape longer in the left-right direction than in the vertical direction.

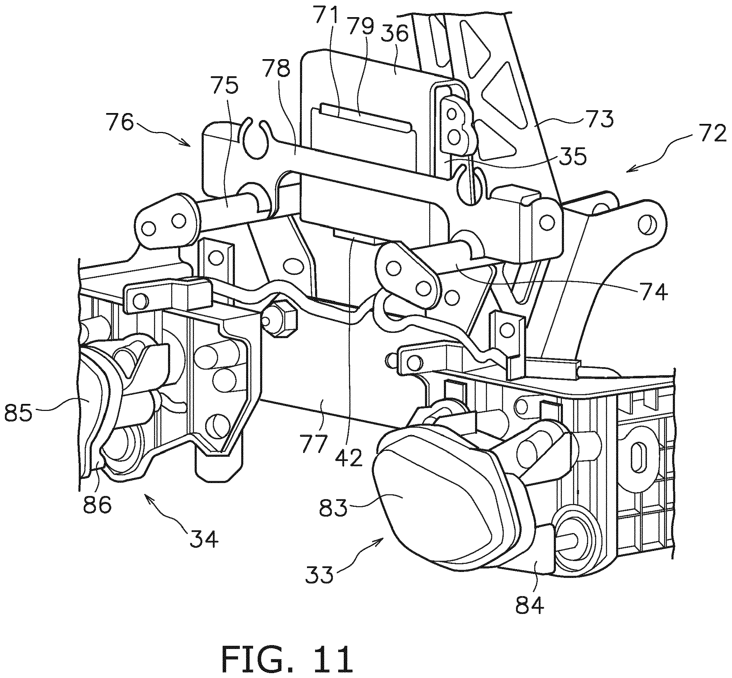

FIG. 11 is a perspective view showing the holder 36 and the structure around the holder 36. As illustrated in FIG. 11, the straddled vehicle 1 includes a stay 72. The stay 72 includes a stay body 73, left and right cowl stays 74 and 75, an LCU stay 76, and a headlight stay 77. As illustrated in FIG. 3, the stay body 73 is arranged in front of the head pipe 11. The stay body 73 is attached to the head pipe 11. The stay body 73 extends obliquely forward and upward from the head pipe 11. The meter unit 21 described above is supported by the stay body 73.

The left and right cowl stays 74 and 75 are fixed to the stay body 73. The left and right cowl stays 74 and 75 extend forward from the stay body 73. The left and right cowl stays 74 and 75 support the front cowl 22. The headlight stay 77 is arranged in front of the stay body 73. The headlight stay 77 is supported by the stay body 73. The headlight stay 77 extends in the left-right direction. The headlight stay 77 supports the left and right headlights 33 and 34.

The LCU stay 76 supports the holder 36. The LCU stay 76 is arranged in front of the stay body 73. The LCU stay 76 is supported by the stay body 73 via the left and right cowl stays 74 and 75. The LCU stay 76 is arranged above the headlight stay 77. The LCU stay 76 includes a bridge portion 78 and a locking plate portion 79. The bridge portion 78 is arranged on the left and right cowl stays 74 and 75. The bridge portion 78 extends in the left-right direction. The bridge portion 78 is fixed to the left and right cowl stays 74 and 75. The locking plate portion 79 is connected to the bridge portion 78. The locking plate portion 79 is arranged at a center of the bridge portion 78 in the left-right direction. The locking plate portion 79 is arranged between the left and right cowl stays 74 and 75 in the left-right direction. The locking plate portion 79 projects upward from the bridge portion 78. The locking plate portion 79 has a plate-like shape. The locking plate portion 79 is inserted into the hole 71 of the band 38 from below. As a result, the holder 36 is attached to the LCU stay 76.

As illustrated in FIG. 3, the light control unit 35 is arranged in front of the stay body 73. The upper end of the light control unit 35 is located above the upper end of the head pipe 11. The lower end of the light control unit 35 is located below the upper end of the head pipe 11. The light control unit 35 is arranged between the left and right cowl stays 74 and 75. The light control unit 35 is arranged so that the front surface of the main body 39 is along the vertical direction and the left-right direction. The light control unit 35 is arranged so that the front surface of the main body 39 is perpendicular to the longitudinal direction.

As illustrated in FIG. 3, the position light 32 includes a position light cover 81 and a position light housing 82. The position light cover 81 is made of a material such as a transparent resin. The position light cover 81 is arranged on the front upper cowl 23. The position light housing 82 is arranged inside the front upper cowl 23. The position light housing 82 includes a light source such as an LED (not illustrated) and a substrate. The light control unit 35 is arranged behind the position light housing 82. The light control unit 35 is arranged between the position light housing 82 and the stay body 73.

The light control unit 35 is arranged above the headlights 33 and 34. As illustrated in FIG. 11, the left headlight 33 includes a left headlight cover 83 and a left headlight housing 84. The right headlight 34 includes a right headlight cover 85 and a right headlight housing 86. The left and right headlight covers 83 and 85 are made of a material such as transparent resin. The left and right headlight covers 83 and 85 are arranged on the front lower cowl 24. The left and right headlight housings 84 and 86 include a light source such as an LED (not illustrated) and a substrate, respectively. The light control unit 35 is arranged above the left and right headlight housings 84 and 86.

In the straddled vehicle 1 according to the present embodiment described above, the light control unit 35 is attached to the stay 72 via the holder 36 made of the elastic material. Therefore, the vibration isolation of the light control unit 35 is improved. The band 38 made of the elastic material is wound around the light control unit 35, so that the light control unit 35 is held by the holder 36. As a result, the light control unit 35 is stably held.

The band 38 is wound around the light control unit 35 and extends from above to below the light control unit 35. Therefore, water easily flows downward along the band 38. Since the connectors 41 and 42 are arranged facing downward, the intrusion of water into the connectors 41 and 42 is suppressed. Further, the band 38 prevent the connectors 41 and 42 from getting wet with water. Therefore, it is possible to prevent the connectors 41 and 42 from getting wet with water while suppressing the decrease in the degree of freedom in the layout of the light control unit 35 and the expansion of the arrangement space.

The holder 36 is attached to the LCU stay 76 by inserting the locking plate portion 79 into the hole 71 of the band 38. Therefore, the holder 36 is attached to the LCU stay 76 without using a fixing member such as a bolt. Therefore, the light control unit 35 can be arranged even in a narrow space where it is difficult to provide a tool path. As a result, the degree of freedom in arranging the light control unit 35 is improved.

Although one embodiment of the present invention has been described above, the present invention is not limited to the above embodiment, and various modifications can be made without departing from the scope of protection as defined by the appended claims.

The straddled vehicle 1 of the above embodiment is a so-called street motorcycle. However, the straddled vehicle of the present invention is not limited to a street motorcycle, and may be an off-road motorcycle. Alternatively, the straddled vehicle may be a scooter, underbone, or moped.

The configuration of the straddled vehicle 1 is not limited to that of the above embodiment, and may be changed. For example, the shape of the body frame 2 is not limited to that of the above embodiment, and may be changed. The power unit 6 is not limited to the internal combustion engine, and may include an electric motor. The number of front wheel 7 is not limited to one, and may be two or more. The number of rear wheel 9 is not limited to one, and may be two or more.

The configurations of the lighting devices 31 to 34 are not limited to that of the above embodiment, and may be changed. For example, the number of position lights may be one. The number of headlights may be one. The arrangement of the position lights or the headlights may be changed.

The arrangement or shape of the light control unit 35 is not limited to that of the above embodiment, and may be changed. For example, the light control unit 35 may be arranged so that the front surface of the main body 39 is inclined with respect to the vertical direction or the left-right direction. The arrangement or shape of the holder 36 is not limited to that of the above embodiment, and may be changed. For example, the support portion 37 and the band 38 may be provided separately from each other.

The support portion 37 may be made of a material other than an elastic material such as resin.

### REFERENCE SIGNS LIST

31 to 34: Lighting device, 35: Light control unit, 36: Holder, 37: Support portion, 38: Band, 41,42: Connector, 51: Bottom surface of support portion, 52, 53: Side surface of support portion, 56, 57: Hole, 58,59: Locked portion, 61, 62: Locking portion, 63: Front surface of band, 64: Upper surface of band, 65: Rear surface of band, 68: Protrusion, 71: Hole, 72: Stay

## Claims

1. A straddled vehicle (1) comprising:
a headlight (33, 34)
a light control unit (35) configured to control the headlight (33, 34);
a holder (36) that holds the light control unit (35) and is made of an elastic material; and
a stay (76) that supports the holder (36), wherein
the light control unit (35) includes
a main body (39), and
a connector (41, 42) that protrudes downward from the main body,
the holder (36) includes
a support portion (37) arranged below the light control unit (35),
**characterized in that** the holder (36) further includes a band (38) that is arranged behind, above, and in front of the light control unit (35) and wound around the light control unit (35),
wherein the band (38) extends from above to below the light control unit (35), and
the band (38) overlaps the connector (41, 42) as seen in a vehicle front view.

2. The straddled vehicle according to claim 1, wherein
a lower end of the band (38) is located below a lower end of the connector (41, 42).

3. The straddled vehicle according to claim 1 or 2, wherein
the band (38) includes a hole, and
the holder (36) is attached to the stay (76) by inserting the stay (76) into the hole (71).

4. The straddled vehicle according to claim 3, wherein
the stay (76) is inserted into the hole from below.

5. The straddled vehicle according to any one of claims 1 to 4, wherein
the holder (36) includes a protrusion (68) that projects from an inner surface of the band (38) toward the light control unit (35).

6. The straddled vehicle according to any one of claims 1 to 5, wherein
the band (38) includes
a front surface (63) that is located in front of the light control unit (35) and extends upward from the support portion (37),
an upper surface (64) that is located above the light control unit (35) and extends rearward from an upper end of the front surface (63), and
a rear surface (65) that is located behind the light control unit (35) and extends downward from the upper surface (64).

7. The straddled vehicle according to claim 6, wherein
the rear surface (65) overlaps the connector (41,42) as seen in the vehicle front view.

8. The straddled vehicle according to claim 6 or 7, wherein
a lower end (651) of the rear surface (65) is located below a lower end of the connector (41, 42).

9. The straddled vehicle according to any one of claims 1 to 8, wherein
the support portion (37) and the band (38) are integrally formed.

10. The straddled vehicle according to any one of claims 1 to 9, wherein
the band (38) includes a locked portion (58, 59), and
the support portion (37) includes a locking portion (61, 62) that locks to the locked portion (58, 59).

11. The straddled vehicle according to any one of claims 1 to 10, wherein
the band (38) is wound around the light control unit (35) under tension.

12. The straddled vehicle according to any one of claims 1 to 11, wherein
the support portion (37) includes a bottom surface (51) that is located below the light control unit (35), and
the bottom surface (51) includes a hole (56, 57) through which the connector (41, 42) is passed.

13. The straddled vehicle according to any one of claims 1 to 12, wherein
the support portion (37) includes a side surface (52, 53) arranged on a lateral side of the light control unit (35).

14. The straddled vehicle according to any one of claims 1 to 13, wherein
the band (38) is wound around the light control unit (35) so that the light control unit (35) is opened laterally.

## Patentansprüche

1. Spreizsitz-Fahrzeug (1), das umfasst:
einen Scheinwerfer (33,34),
eine Lichtsteuerungs-Einheit (35), die zum Steuern des Scheinwerfers (33, 34) ausgeführt ist;
einen Halter (36), der die Lichtsteuerungs-Einheit (35) hält und aus einem elastischen Material besteht; sowie
eine Stütze (76), die den Halter (36) trägt, wobei
die Lichtsteuerungs-Einheit (35) enthält:
einen Hauptkörper (39) und
einen Verbinder (41, 42), der von dem Hauptkörper nach unten vorsteht,
wobei der Halter (36) enthält:
einen Trageabschnitt (37), der unterhalb der Lichtsteuerungs-Einheit (35) angeordnet ist,
**dadurch gekennzeichnet, dass** der Halter (36) des Weiteren ein Band (38) enthält, das hinter, oberhalb und vor der Lichtsteuerungs-Einheit (35) angeordnet und um die Lichtsteuerungs-Einheit (35) herum gewickelt ist,
wobei sich das Band (38) von einer Position oberhalb der Lichtsteuerungs-Einheit (35) bis an eine Position unterhalb derselben erstreckt und
das Band (38), in einer Fahrzeug-Vorderansicht gesehen, den Verbinder (41, 42) überlappt.

2. Spreizsitz-Fahrzeug nach Anspruch 1, wobei:
sich ein unteres Ende des Bandes (38) unterhalb eines unteren Endes des Verbinders (41,42) befindet.

3. Spreizsitz-Fahrzeug nach Anspruch 1 oder 2, wobei
das Band (38) ein Loch enthält, und
der Halter (36) an der Stütze (76) angebracht wird, indem die Stütze (76) in das Loch (71) eingeführt wird.

4. Spreizsitz-Fahrzeug nach Anspruch 3, wobei
die Stütze (76) von unten in das Loch eingeführt wird.

5. Spreizsitz-Fahrzeug nach einem der Ansprüche 1 bis 4, wobei
der Halter (36) einen Vorsprung (68) enthält, der von einer Innenfläche des Bandes (38) in Richtung der Lichtsteuerungs-Einheit (35) vorsteht.

6. Spreizsitz-Fahrzeug nach einem der Ansprüche 1 bis 5, wobei
das Band (38) enthält:
eine vordere Fläche (63), die sich vor der Lichtsteuerungs-Einheit (35) befindet und sich von dem Trageabschnitt (37) nach oben erstreckt,
eine obere Fläche (64), die sich oberhalb der Lichtsteuerungs-Einheit (35) befindet und
sich von einem oberen Ende der vorderen Fläche (63) nach hinten erstreckt, sowie
eine hintere Fläche (65), die sich hinter der Lichtsteuerungs-Einheit (35) befindet und sich von der oberen Fläche (64) nach unten erstreckt.

7. Spreizsitz-Fahrzeug nach Anspruch 6, wobei:
die hintere Fläche (65), in der Fahrzeug-Vorderansicht gesehen, den Verbinder (41, 42) überlappt.

8. Spreizsitz-Fahrzeug (1) nach Anspruch 6 oder 7, wobei
sich ein unteres Ende (651) der hinteren Fläche (65) unterhalb eines unteren Endes des Verbinders (41, 42) befindet.

9. Spreizsitz-Fahrzeug nach einem der Ansprüche 1 bis 8, wobei
der Trageabschnitt (37) und das Band (38) integral ausgebildet sind.

10. Spreizsitz-Fahrzeug nach einem der Ansprüche 1 bis 9, wobei
das Band (38) einen passiven Arretierabschnitt (58, 59) enthält, und
der Trageabschnitt (37) einen aktiven Arretierabschnitt (61, 62) enthält, der den passiven Arretierabschnitt (58, 59) arretiert.

11. Spreizsitz-Fahrzeug nach einem der Ansprüche 1 bis 10, wobei
das Band (38) unter Spannung um die Lichtsteuerungs-Einheit (35) herum gewickelt ist.

12. Spreizsitz-Fahrzeug nach einem der Ansprüche 1 bis 11, wobei
der Trageabschnitt (37) eine Bodenfläche (51) enthält, die sich unterhalb der Lichtsteuerungs-Einheit (35) befindet, und
die Bodenfläche (51) ein Loch (56, 57) enthält, durch das der Verbinder (41, 42) hindurch geführt wird.

13. Spreizsitz-Fahrzeug nach einem der Ansprüche 1 bis 12, wobei
der Trageabschnitt (37) eine Seitenfläche (52, 53) enthält, die an einer Längsseite der Lichtsteuerungs-Einheit (35) angeordnet ist.

14. Spreizsitz-Fahrzeug nach einem der Ansprüche 1 bis 13, wobei
das Band (38) so um die Lichtsteuerungs-Einheit (35) herum gewickelt ist, dass die Lichtsteuerungs-Einheit (35) seitlich geöffnet ist.

## Revendications

1. Véhicule à selle (1) comprenant :
un bloc optique (33, 34),
une unité de commande de lumière (35) configurée pour piloter le bloc optique (33, 34),
une monture (36) qui soutient l'unité de commande de lumière (35) et qui est constituée d'un matériau élastique, et
un support (76) qui supporte la monture (36), où l'unité de commande de lumière (35) inclut :
un corps principal (39), et
un connecteur (41, 42) qui dépasse vers le bas du corps principal,
la monture (36) inclut :
un organe de support (37) disposé en dessous de l'unité de commande de lumière (35),
**caractérisé en ce que** la monture (36) inclut en outre une bande (38) qui est disposée derrière, au-dessus et en avant de l'unité de commande de lumière (35) et qui est enroulée autour de l'unité de commande de lumière (35),
où la bande (38) se déploie depuis le dessus jusqu'en dessous de l'unité de commande de lumière (35), et
la bande (38) chevauche le connecteur (41, 42) comme on peut le voir dans une vue avant du véhicule.

2. Véhicule à selle selon la revendication 1, dans lequel :
l'extrémité inférieure de la bande (38) est située en dessous de l'extrémité inférieure du connecteur (41, 42).

3. Véhicule à selle selon la revendication 1 ou la revendication 2, dans lequel :
la bande (38) inclut un trou, et
la monture (36) est fixée au support (76) en insérant le support (76) dans le trou (71).

4. Véhicule à selle selon la revendication 3, dans lequel :
le support (76) est inséré dans le trou par en dessous.

5. Véhicule à selle selon l'une quelconque des revendications 1 à 4, dans lequel :
la monture (36) inclut une protubérance (68) qui dépasse de la surface interne de la bande (38) en direction de l'unité de commande de lumière (35).

6. Véhicule à selle selon l'une quelconque des revendications 1 à 5, dans lequel :
la bande (38) inclut :
une surface avant (63) qui est située en avant de l'unité de commande de lumière (35) et se déploie vers le haut à partir de l'organe de support (37),
une surface supérieure (64) qui est située au-dessus de l'unité de commande de lumière (35) et se déploie vers l'arrière depuis l'extrémité supérieure de la surface avant (63), et
une surface arrière (105) qui est située derrière l'unité de commande de lumière (35) et se déploie vers le bas depuis la surface supérieure (64).

7. Véhicule à selle selon la revendication 6, dans lequel :
la surface arrière (65) chevauche le connecteur (41, 42) comme on peut le voir dans la vue avant du véhicule.

8. Véhicule à selle selon la revendication 6 ou la revendication 7, dans lequel :
l'extrémité inférieure (651) de la surface arrière (65) est située en dessous de l'extrémité inférieure du connecteur (41, 42).

9. Véhicule à selle selon l'une quelconque des revendications 1 à 8, dans lequel :
l'organe de support (37) et la bande (38) sont formés en une seule pièce.

10. Véhicule à selle selon l'une quelconque des revendications 1 à 9, dans lequel :
la bande (38) inclut une partie verrouillée (58, 59), et
l'organe de support (37) inclut un organe de verrouillage (61, 62) qui se verrouille sur la partie verrouillée (58, 59).

11. Véhicule à selle selon l'une quelconque des revendications 1 à 10, dans lequel :
la bande (38) est enroulée en tension autour de l'unité de commande de lumière (35).

12. Véhicule à selle selon l'une quelconque des revendications 1 à 11, dans lequel :
l'organe de support (37) inclut une surface de fond (51) qui est située en dessous de l'unité de commande de lumière (35), et
la surface de fond (51) inclut un trou (56, 57) au travers duquel est passé le connecteur (41, 42).

13. Véhicule à selle selon l'une quelconque des revendications 1 à 12, dans lequel :
l'organe de support (37) inclut une surface latérale (52, 53) disposée sur le flanc latéral de l'unité de commande de lumière (35).

14. Véhicule à selle selon l'une quelconque des revendications 1 à 13, dans lequel :
la bande (38) et enroulée autour de l'unité de commande de lumière (35) de sorte à ce que l'unité de commande de lumière (35) soit ouverte latéralement.
